# EUROPEAN PATENT APPLICATION

(11) **EP 3 471 120 A1**
(43) Date of publication of application: **17.04.2019**
(21) Application number: 17810500.3
(22) Date of filing: 01.06.2017
(51) Int. Cl.: H01G 11/26, H01G 11/32, H01G 9/00

(54) **ELECTROCHEMICAL CAPACITOR**

(30) Priority: 08.06.2016 KR 20160071294
(71) Applicant: Nesscap Co., Ltd., Yongin-si, Gyeonggi-do 17102 (KR)
(72) Inventor: OH, Sol-Seon, Yongin-si, Gyeonggi-do 17073 (KR); CHOI, Jung-Ho, Yongin-si, Gyeonggi-do 17083 (KR); KWON, Kyong-Hee, Yongin-si, Gyeonggi-do 17082 (KR); CHAE, Jung-Hoon, Hwaseong-si, Gyeonggi-do 18482 (KR); CHANG, A-Rum, Yongin-si, Gyeonggi-do 17095 (KR); PARK, Gye-Nam, Suwon-si, Gyeonggi-do 16512 (KR); KIM, Hyeon-Jin, Hwaseong-si, Gyeonggi-do 18417 (KR)
(74) Representative: Zacco Sweden AB
(86) International application number: PCT/KR2017/005719
(87) International publication number: WO 2017/213377

(57) **Abstract**

Disclosed is a capacitor that is not easily degraded to stably maintain the performance for a long time. The electrochemical capacitor includes a first electrode provided in a rolled sheet form and having active material layers coated on both surfaces thereof; a second electrode provided in a rolled sheet form at an outer side of the first electrode to face the first electrode and having active material layers coated on both surfaces thereof; and a separator interposed and rolled between the first electrode and the second electrode, wherein at least a portion of an outermost layer of the first electrode is exposed to the outside.

## Description

### TECHNICAL FIELD

The present application claims priority to Korean Patent Application No. 10-2016-0071294 filed on June 8, 2016 in the Republic of Korea, the disclosures of which are incorporated herein by reference.

The present disclosure relates to a capacitor manufacturing technology, and more particularly, to a capacitor that is not easily degraded to stably maintain the performance for a long time.

### BACKGROUND ART

An electrochemical capacitor is one of main devices for storing energy and is also called various other terms such as a super capacitor, an ultra capacitor and an electric double layer capacitor.

The electrochemical capacitor is applied to more and more fields due to characteristics such as high output, high capacity and long life. In recent years, the electrochemical capacitor is applied to more fields of not only small electronic devices but also industrial devices, uninterruptible power supply (UPS), electric vehicles and smart grids.

Generally, the electrochemical capacitor includes a positive electrode and a negative electrode, which are formed by coating an active material layer on the surface of a current collector, a separator positioned between the positive electrode and the negative electrode to electrically insulate the positive electrode and the negative electrode and allow the transfer of ions, an electrolytic solution impregnated with the electrode and the separator to supply ions and enable the conduction of ions, and a case for accommodating the positive electrode, the negative electrode, the separator and the electrolytic solution therein.

Representatively, the electrochemical capacitor may be fabricated by winding and stacking a plurality of electrodes and a separator in a cylindrical shape to form an electrode assembly, then accommodating the formed electrode assembly in a case, injecting an electrolytic solution into the case, and sealing the case.

The Electrochemical capacitor is evaluated as being useable for a long time compared with other energy storage devices. However, the performance of the electrochemical capacitor may also be deteriorated as being used longer.

In particular, in the capacitor, the electrode assembly is in a wound form like a roll, namely in a roll type. However, if the electrode assembly is formed in a roll type as above, the separator or the electrode may be degraded at a core portion and terminal portion thereof as the charge/discharge cycle is repeated, which may degrade the performance of the capacitor. In addition, the electrochemical capacitor is likely to be degraded at any one of the positive electrode and the negative electrode, especially at an electrode located at an outer side, during use. In this case, the overall performance of the capacitor is dependent on the performance of the electrode that is degraded, and thus the overall performance of the capacitor may be significantly degraded due to the degraded electrode. Moreover, if various components in the capacitor are degraded, gas may be generated inside the capacitor, thereby degrading the performance and safety of the capacitor and deforming the shape of the capacitor.

### DISCLOSURE

### Technical Problem

The present disclosure is designed to solve the problems of the related art, and therefore the present disclosure is directed to providing an electrochemical capacitor, which may stably maintain the performance for a long time and secure the safety by suppressing degradation of internal components.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided an electrochemical capacitor, comprising: a first electrode provided in a rolled sheet form and having active material layers coated on both surfaces thereof; a second electrode provided in a rolled sheet form at an outer side of the first electrode to face the first electrode and having active material layers coated on both surfaces thereof; and a separator interposed and rolled between the first electrode and the second electrode, wherein at least a portion of an outermost layer of the first electrode is exposed to the outside.

Here, a terminal portion of the first electrode may be extended longer than a terminal portion of the second electrode so that at least a portion of the outermost layer of the first electrode is exposed to the outside.

In addition, a terminal portion of the second electrode may be partially cut to be concave inwards in a length direction.

In addition, the second electrode may have a hole formed through a portion of an outermost layer thereof in a thickness direction.

In addition, 20% to 80% of the entire area of the outermost layer of the first electrode may be exposed to the outside.

In addition, 30% to 70% of the entire area of the outermost layer of the first electrode may be exposed to the outside.

In addition, the first electrode may have a length equal to or greater than a length of the second electrode.

In addition, at least one of the first electrode and the second electrode may have a stripping portion on an outer surface of the outermost layer thereof, at which the active material layer is at least partially removed or is not formed.

### Advantageous Effects

According to an embodiment of the present disclosure, the performance of the electrochemical capacitor may be improved further.

In particular, according to an embodiment of the present disclosure, it is possible to prevent or minimize degradation of various components such as electrodes or a separator included in the electrochemical capacitors. Moreover, according to the present disclosure, the capacitor is in a roll type where the electrodes and the separator are rolled, and thus it is possible to overcome the problem that a lot of degradation occurs at a terminal portion of the electrode or the separator.

In addition, according to an embodiment of the present disclosure, it is possible to prevent the overall performance of the capacitor from being degraded, by suppressing the degradation at the terminal portion of the electrodes.

Thus, according to the above embodiments of the present disclosure, the performance of the electrochemical capacitor may be stably maintained for a long time.

Moreover, according to an embodiment of the present disclosure, it is possible to reduce the generation of gas inside the electrochemical capacitor.

Thus, according to an embodiment of the present disclosure, it is possible to prevent the capacitor from being deformed while improving the safety and maintaining the performance.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing an electrode assembly that is a component of an electrochemical capacitor according to an embodiment of the present disclosure.
FIG. 2 is a cross-sectioned view schematically showing the capacitor according to an embodiment of the present disclosure.
FIG. 3 is a front view showing outermost layers of a first electrode and a second electrode according to another embodiment of the present disclosure, separately.
FIG. 4 is a front view showing outermost layers of a first electrode and a second electrode according to still another embodiment of the present disclosure, separately.
FIG. 5 is a front view showing outermost layers of a first electrode and a second electrode according to still another embodiment of the present disclosure, separately.
FIG. 6 is a cross-sectioned view schematically showing a stripping portion according to an embodiment of the present disclosure.
FIGS. 7 and 8 are cross-sectioned views schematically showing a stripping portion according to another embodiment of the present disclosure.
FIG. 9 is a cross-sectioned view schematically showing a stripping portion according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

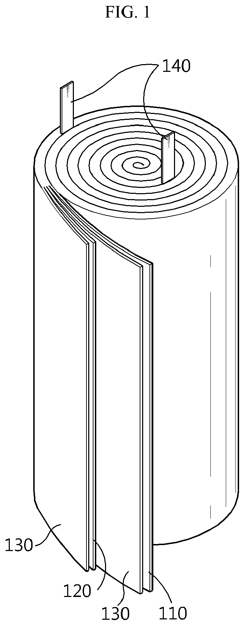

FIG. 1 is a perspective view schematically showing an electrode assembly that is a component of an electrochemical capacitor according to an embodiment of the present disclosure.

Referring to FIG. 1, the electrochemical capacitor according to the present disclosure includes a first electrode 110, a second electrode 120 and a separator 130 as an electrode assembly.

The first electrode 110 may have a sheet form, namely a plate shape with a large surface. In addition, the first electrode 110 of the sheet form may have a rolled shape. That is, as shown in the figure, the first electrode 110 may be rolled in one direction to form a roll shape.

The first electrode 110 may be coated with an active material layer on a surface thereof. More specifically, the first electrode 110 may include a current collector and an active material layer. Here, the current collector is made of an electrically conductive material such as a metal to serve as a path for transferring charges and may have a sheet form. In addition, the active material layer may be formed on the surface of the current collector of a sheet form, especially on both surfaces thereof. The active material layer may include an active material such as activated carbon, a conductive material, a binder, and the like.

The second electrode 120 may function as an electrode plate having a polarity opposite to that of the first electrode 110. For example, when the first electrode 110 is a positive electrode, the second electrode 120 may function as a negative electrode. Also, when the first electrode 110 is a negative electrode, the second electrode 120 may serve as a positive electrode. The second electrode 120 may be constructed similar to the first electrode 110 in many aspects, even though its polarity is opposite to that of the first electrode 110. For example, the second electrode 120 may have a rolled sheet form. Also, the second electrode 120 may have a current collector and an active material layer coated on a surface thereof.

The second electrode 120 may be made of the same material as the first electrode 110 or may be made of a different material. For example, the second electrode 120 may be configured such that the components of the current collector and/or the active material layer are the same as those of the first electrode 110.

The second electrode 120 may be configured to face the first electrode 110. That is, the second electrode 120 may be rolled together with the first electrode 110 in a state where the surface of the second electrode 120 overlaps with the surface of the first electrode 110, so that the second electrode 120 faces the first electrode 110 from a core portion to a terminal portion. Here, the core portion refers to an end portion at the center in a length direction when the second electrode 120 is rolled, and the terminal portion refers to an end portion of the outer side in a length direction when the second electrode 120 is rolled. In this configuration, since the first electrode 110 and the second electrode 120 are rolled together, both surfaces of the first electrode 110 and the second electrode 120 may face each other, except for an innermost portion and an outermost portion. That is, both the inner surface and the outer surface of the first electrode 110 may face the second electrode 120, except for an innermost layer located at an innermost side. In addition, both the inner surface and the outer surface of the second electrode 120 may face the first electrode 110, except for an outermost layer located at an outermost side.

The second electrode 120 may be located at an outer side of the first electrode 110. That is, when the first electrode 110 and the second electrode 120 are rolled together, the second electrode 120 may be regarded as being rolled at the outer side of the first electrode 110. The core portion of the second electrode 120 may be located at an outer side of the core portion of the first electrode 110. For example, when the electrochemical capacitor is configured in a cylindrical shape, an inner end of the first electrode 110 may be located closer to the central axis of the cylinder than an inner end of the second electrode 120.

In other words, in the electrochemical capacitor according to the present disclosure, the first electrode 110, the separator 130, explained later, the second electrode 120 and the separator 130 may be stacked in order and rolled based on the inner center thereof. Accordingly, the first electrode 110 may be located at an inner side of the second electrode 120.

Here, when the first electrode 110 and the second electrode 120 having a sheet form are rolled, the inner side and the outer side may mean relative locations of the first electrode 110 and the second electrode 120, which are positioned on the same layer based on the inner center of the electrochemical capacitor. For example, a layer of the first electrode 110 and the second electrode 120 rolled to make a turn at an innermost side may be expressed as a first layer, a layer rolled to make a turn on the outer side of the first layer may be expressed as a second layer, and a layer rolled to make a turn on the outer side of the second layer may be expressed as a third layer. At this time, when the first electrode 110 and the second electrode 120 are compared in the same layer, for example in the second layer, the first electrode 110 may be regarded as being located on the inner side of the second electrode 120.

The separator 130 may be interposed between the first electrode 110 and the second electrode 120. The separator 130 may prevent the first electrode 110 and the second electrode 120 from directly contacting each other to prohibit a short circuit and allow ions to move therebetween. For this purpose, the separator 130 may have a thin and flat sheet form, similar to the first electrode 110 and the second electrode 120, and be rolled together with the first electrode 110 and the second electrode 120 between the first electrode 110 and the second electrode 120.

In the present disclosure, the first electrode 110, the second electrode 120 and the separator 130 are not limited to any particular materials. That is, in the present disclosure, various kinds of electrode and separator materials known in the art at the time of filing of this application may be employed as the materials of the first electrode 110, the second electrode 120 and the separator 130.

In addition, the electrochemical capacitor according to the present disclosure may include an electrolytic solution. The electrolytic solution may contain an electrolyte serving as a salt component and an organic solvent.

The electrolyte may include at least one kind of anion such as Br⁻, BF₄⁻, PF₆⁻ and TFSI⁻, and at least one kind of cation with a quaternary ammonium structure such as spiro-(1,1')-bipyrrolidinium, piperidine-1-spiro-1'-pyrrolidinium, spiro-(1,1')-bipiperidinium, dialkylpyrrolidinium, dialkylimidazolium, dialkylpyrridinium, tetra-alkylammonium, dialkylpiperidinium , tetra-alkylphosphonium, and the like. The electrolyte may use a non-lithium salt that do not contain lithium.

In addition, the organic solvent used in the electrolytic solution may include at least one selected from the group consisting of propylene carbonate (PC), diethyl carbonate, ethylene carbonate (EC), sulfolane, acetonitrile, dimethoxyethane, tetrahydrofuran and ethyl methyl carbonate EMC).

However, the present disclosure is not limited to any particular material of the electrolytic solution, and various electrolytic solutions known in the art at the time of filing of this application may be employed as the electrolytic solution in the capacitor of the present disclosure.

In addition, the electrochemical capacitor according to the present disclosure may include a case. The case may have an empty space therein to accommodate the first electrode 110, the second electrode 120, the separator 130 and the electrolytic solution. The case may be made of a metal or polymer material and may be sealed so that the electrolytic solution does not leak.

In particular, the electrochemical capacitor according to the present disclosure may be configured such that a portion of the first electrode 110 is exposed to the outside.

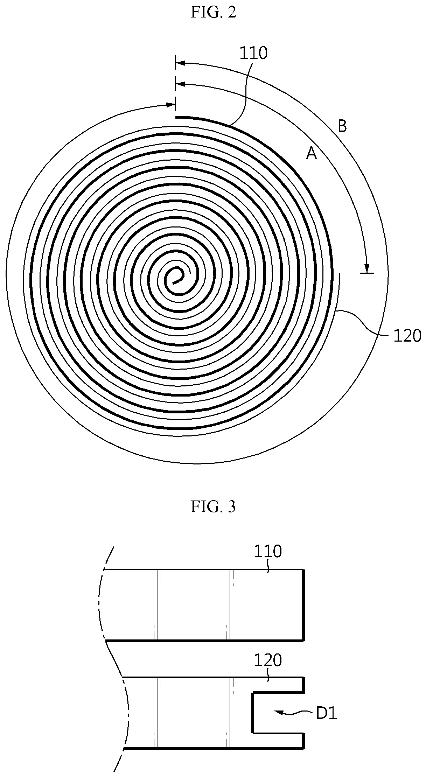

FIG. 2 is a cross-sectioned view schematically showing the capacitor according to an embodiment of the present disclosure. However, for convenience, in FIG. 2, the separator 130 is not depicted.

Referring to FIG. 2, the first electrode 110 may have a terminal portion extending longer than a terminal portion of the second electrode 120. That is, the first electrode 110 may be configured to have a terminal that extends long beyond a portion where the second electrode 120 is terminated in the rolling direction. In this case, the terminal portion of the second electrode 120 may be formed shorter than the terminal portion of the first electrode 110. In other words, the first electrode 110 located at the inner side of the second electrode 120 may have a terminal portion extending longer than the terminal portion of the second electrode 120.

Thus, the first electrode 110 may have a portion that is exposed to the outside without being surrounded by the second electrode 120, as indicated by A. In a conventional capacitor, the first electrode 110 located at an inner side is surrounded by the second electrode 120 located at an outer side, and thus the outermost layer of the first electrode 110 is not exposed to the outside. However, the capacitor according to the present disclosure may be configured such that at least a portion of the outermost layer of the first electrode 110 is exposed to the outside.

According to this configuration of the present disclosure, it is possible to improve the performance of the electrochemical capacitor while alleviating the performance degradation. Particularly, an electrode located at an outermost side and exposed to the outside may be degraded more easily than an electrode not exposed to the outside. At this time, if any one electrode is degraded relatively large, the performance of the capacitor may be lowered based on the performance of the electrode that has been degraded greater, compared to the performance of the electrode that has been degraded less. However, in the embodiment, the second electrode 120 and the first electrode 110 are partially exposed to the outside together, thereby reducing the outwardly exposed area of the second electrode 120. Thus, according to this embodiment of the present disclosure, it is possible to prevent the capacitor located at an outer side is intensively degraded, thereby lowering the degree of performance degradation of the capacitor.

An exposure ratio of the first electrode 110 may be inversely proportional to an exposure ratio of the second electrode 120. That is, if the outermost layer of the first electrode 110 is exposed more, the outermost layer of the second electrode 120 may be exposed less. On the contrary, if the outermost layer of the first electrode 110 is exposed less, the outermost layer of the second electrode 120 may be exposed more.

Here, the first electrode 110 may be configured such that a portion corresponding to 10% to 90% of the entire area of the outermost layer of the first electrode 110 is exposed to the outside.

For example, in FIG. 2, the outermost layer of the first electrode 110 may be a portion denoted by B. In addition, in FIG. 2, the portion of the outermost layer of the first electrode 110 exposed to the outside may be a portion denoted by A. In this case, a ratio of the area of the portion indicated by A to the area of the portion indicated by B may be 10% to 90%.

Here, if the width of the entire portion denoted by B, namely the outermost layer of the first electrode 110, is constant, the ratio of the area of the portion denoted by A to the area of the portion denoted by B may correspond to a ratio of the length of the portion denoted by A in the rolling direction to the length of the portion denoted by B in the rolling direction. Thus, if the length of the portion indicated by A is L_{A} and the length of the portion indicated by B is L_{B}, L_{A}/L_{B} may be expressed as 0.1 to 0.9.

Preferably, the first electrode 110 may be configured such that a portion corresponding to of 20% to 80% of the entire area of the outermost layer is exposed to the outside. That is, in FIG. 2, the portion denoted by A may be 20% to 80% of the area of the portion denoted by B. In particular, when the outermost layer of the first electrode 110 has a uniform width, the first electrode 110 may be configured such that L_{A}/L_{B} is expressed as 0.2 to 0.8. For example, the first electrode 110 may be configured such that the area of the portion exposed to the outside is 20% of the entire area of the outermost layer.

More preferably, the first electrode 110 may be configured such that a portion corresponding to 30% to 70% of the entire area of the outermost layer is exposed to the outside. That is, in FIG. 2, the portion denoted by A may be 30% to 70% of the area of the portion denoted by B. In particular, when the outermost layer of the first electrode 110 has a uniform width, L_{A}/L_{B} may be expressed as 0.3 to 0.7. For example, the first electrode 110 may be configured such that the area of the portion exposed to the outside is 30% of the entire area of the outermost layer. Alternatively, the first electrode 110 may be configured such that the area of the portion exposed to the outside is 70% of the entire area of the outermost layer.

In addition, the first electrode 110 may be configured such that a portion corresponding to 40% to 60% of the entire area of the outermost layer is exposed to the outside. Further, the first electrode 110 may be configured such that a portion corresponding to 45% to 55% of the entire area of the outermost layer is exposed to the outside.

In particular, the first electrode 110 may be configured such that a portion corresponding to 50% of the entire area of the outermost layer is exposed to the outside. In this case, the first electrode 110 and the second electrode 120 may be exposed to the outside at identical or similar portions.

In addition, the first electrode 110 may be configured to have a length equal to or greater than the length of the second electrode 120.

For example, the length of the first electrode 110 from the core portion that is an inner end to the terminal portion that is an outer end may be the same as the length of the second electrode 120. That is, the length of the first electrode 110 in the rolling direction may be the same as the length of the second electrode 120 in the rolling direction.

Alternatively, the first electrode 110 may be configured to have a length in the rolling direction longer than the length of the second electrode 120 in the rolling direction.

According to this configuration of the present disclosure, at least a portion of the outermost layer of the first electrode 110 may exposed to the outside more easily, and it is possible to improve the performance of the electrochemical capacitor and more advantageously prevent the degradation during use.

Meanwhile, in an embodiment, it has been described that the terminal portion of the first electrode 110 in the rolling direction is extended longer than the terminal portion of the second electrode 120 in the rolling direction so that at least a portion of the outermost layer of the first electrode 110 is exposed to the outside. However, the present disclosure is not necessarily limited thereto.

FIG. 3 is a front view showing outermost layers of the first electrode 110 and the second electrode 120 according to another embodiment of the present disclosure, separately. Namely, in FIG. 3, the terminal portions, namely the outermost portions of the first electrode 110 and the second electrode 120, are depicted up and down on the same plane.

Referring to FIG. 3, the second electrode 120 may be configured such that a portion of the terminal portion is cut to be concave inwards in the length direction, like a portion indicated by D1. That is, the second electrode 120 may be configured to have a concave portion that is concave in a left direction, namely inwards in the length direction, at a front end portion of the outer side of the terminal portion.

At this time, as shown in FIG. 3, the first electrode 110 and the second electrode 120 may be configured so that their terminal portions terminate at the same point. That is, the first electrode 110 and the second electrode 120 may be configured so that the terminal portion of any one of them does not extend long and protrude in the length direction. However, since a portion of the terminal portion of the second electrode 120 located at an outer side is cut to be concave inwards, a portion of the outermost layer of the first electrode 110 may be exposed to the outside through the cut portion of the second electrode 120.

According to this configuration of the present disclosure, it is possible to expose a portion of the outermost layer of the first electrode 110, regardless of the relative length of the terminal portion of the first electrode 110 and the terminal portion of the second electrode 120. That is, even if the terminal portion of the first electrode 110 is not longer than the terminal portion of the second electrode 120, at least a portion of the outermost layer of the first electrode 110 may be exposed to the outside. Thus, in this case, the outermost layer of the first electrode 110 may be easily exposed to the outside without any effort to precisely adjust the lengths of the first electrode 110 and the second electrode 120, thereby improving the process efficiency.

Meanwhile, in FIG. 3, the cutout portion as denoted by D1 may be formed to be concave in a vertical direction at an upper end or a lower end of the outermost layer. For example, in FIG. 3, the upper end of a portion of the outermost layer of the second electrode 120 may be formed to be concavely cut in the downward direction. In addition, through the cut portion of the second electrode 120, the outermost layer of the first electrode 110 may be exposed to the outside.

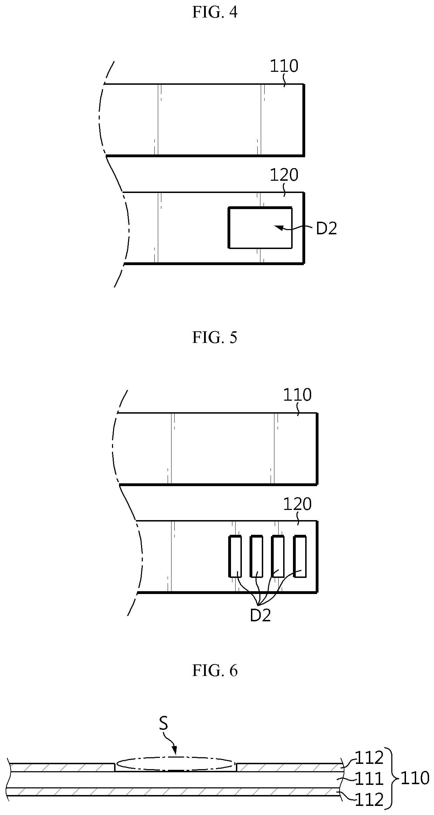

FIG. 4 is a front view showing outermost layers of the first electrode 110 and the second electrode 120 according to still another embodiment of the present disclosure, separately. In FIG. 4, the terminal portions, namely the outermost portions of the first electrode 110 and the second electrode 120, are depicted up and down on the same plane, similar to FIG. 3.

Referring to FIG. 4, the second electrode 120 may have a hole formed in a thickness direction through a portion of the outermost layer, like a portion indicated by D2. In addition, a portion of the outermost layer of the first electrode 110 may be exposed to the outside through the hole.

At this time, as shown in FIG. 4, the first electrode 110 and the second electrode 120 may be configured so that the terminal portions thereof terminate at the same point. That is, the first electrode 110 and the second electrode 120 may be configured such that the terminal portion of any one of them does not extend longer in the length direction.

According to this configuration of the present disclosure, it is possible to expose a portion of the outermost layer of the first electrode 110, regardless of the relative length of the terminal portion of the first electrode 110 and the terminal portion of the second electrode 120. That is, even if the terminal portion of the first electrode 110 is not longer than the terminal portion of the second electrode 120, at least a portion of the outermost layer of the first electrode 110 may be exposed to the outside. Thus, it is not needed to precisely match the lengths of the first electrode 110 and the second electrode 120, and thus the capacitor manufacturing process such as a process of rolling the electrode plates may be performed more easily.

FIG. 5 is a front view showing outermost layers of the first electrode 110 and the second electrode 120 according to still another embodiment of the present disclosure, separately.

Referring to FIG. 5, as indicated by D2, the second electrode 120 may have a plurality of holes. That is, in this present embodiment, the second electrode 120 has a plurality of holes formed in the thickness direction through the outermost layer, different from FIG. 4. In addition, the first electrode 110 may be exposed to the outside through the plurality of holes.

According to this configuration of the present disclosure, each hole may have a small size, and thus it is possible to prevent or lower that the strength, for example tensile strength, of the second electrode 120 is weakened due to the formation of holes. Thus, in this case, the first electrode 110 may be exposed in a wider area, and the mechanical stability of the electrochemical capacitor may be further improved.

In FIG. 5, the plurality of holes are arranged in the rolling direction of the second electrode 120, namely in the length direction, but the plurality of holes may be formed in a direction perpendicular to the rolling direction of the second electrode 120, namely in the vertical direction of FIG. 5.

Meanwhile, as in the embodiments of FIGS. 3 to 5, the configuration in which the second electrode 120 has a cut portion or a hole may also be applied to the configuration in which the second electrode 120 has a terminal portion longer than the terminal portion of the first electrode 110 and to the configuration in which the first electrode 110 has a terminal portion longer than the terminal portion of the second electrode 120.

In addition, in the electrochemical capacitor according to the present disclosure, the first electrode 110 and/or the second electrode 120 may have a stripping portion formed at an outer surface of the outermost layer. Here, the stripping portion may refer to a portion where the active material layer is at least partially removed or not formed.

FIG. 6 is a cross-sectioned view schematically showing a stripping portion according to an embodiment of the present disclosure. FIG. 6 shows a partial configuration of the outermost layer of the first electrode 110. In addition, in FIG. 6, the upper portion is located toward the outside when the first electrode 110 is rolled.

Referring to FIG. 6, the first electrode 110 is formed such that an active material 112 is coated on both surfaces of a current collector 111. Here, the active material layer 112 is completely removed in a portion of at least one surface to form the stripping portion. That is, in the first electrode 110, the stripping portion may be formed by completely removing the active material layer 112 in the thickness direction (in the vertical direction on the figure). In particular, even though FIG. 6 depicts that the stripping portion is formed at a central portion of an electrode for convenience of explanation, the stripping portion may be formed from the terminal portion to a predetermined length on the outer surface of the first electrode 110. In the electrochemical capacitor according to the present disclosure, the stripping portion means a portion where the active material layer, in which the active material layer is normally formed, is not present. The stripping portion may be formed by coating the active material layer and then removing the same or be provided so that the active material layer is not provided there from the beginning. Hereinafter, it will be described that the active material layer is formed and then removed, for the convenience of explanation.

Even though FIG. 6 illustrates that the stripping portion is formed on the outermost layer of the first electrode 110, the stripping portion may also be formed on the outermost layer of the second electrode 120 in a similar manner.

In addition, the stripping portion depicted in FIG. 6 is just an example, and the present disclosure is not necessarily limited to the shape of the stripping portion.

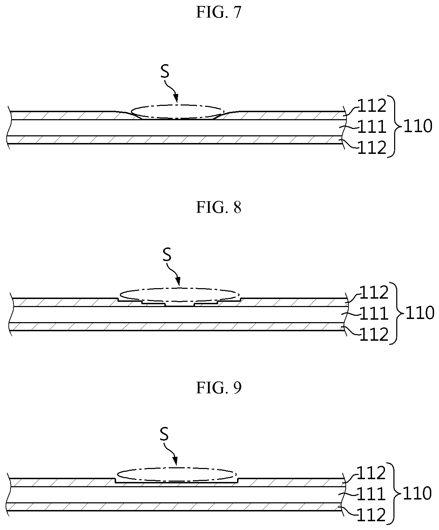

FIGS. 7 and 8 are cross-sectioned views schematically showing a stripping portion according to another embodiment of the present disclosure.

First, referring to FIG. 7, the stripping portion is provided so that the active material layer is completely removed from one surface, similar to FIG. 6, but an end portion of the stripping portion may have an inclined shape. That is, the stripping portion may be configured such that the active material layer is completely removed at a central portion thereof and the thickness of the active material layer is gradually decreased at end portions thereof.

Next, referring to FIG. 8, the stripping portion is provided so that the active material layer is completely removed from one surface, similar to FIG. 7, but the end portions may have a stepped shape. That is, the stripping portion may be configured such that the active material layer is completely removed at the central portion thereof and the active material layer has a step at the end portions thereof.

According to the configuration of the present disclosure, it is possible to prevent or minimize that the coupling force between the active material layer and the current collector is weakened at the ends of the portion where the stripping portion is formed. That is, according to these configurations, it is possible to prevent the active material layer from being easily separated from the current collector due to the formation of the stripping portion.

FIG. 9 is a cross-sectioned view schematically showing a stripping portion according to still another embodiment of the present disclosure.

Referring to FIG. 9, the stripping portion may be formed by partially removing the active material layer, instead of completely removing the active material layer in the thickness direction, different from the embodiments depicted in FIGS. 6 to 8. That is, the active material layer may be configured to have a relatively small thickness at the portion where the stripping portion is formed, without being completely removed.

According to this configuration of the present disclosure, the end portion of the active material layer may not be present in the portion where the stripping portion is located. Thus, it may be more effectively prevented that the active material layer is separated in the portion where the stripping portion is located.

In particular, the stripping portion may be provided at a region of the first electrode 110 and/or the second electrode 120, which is exposed to the outside.

For example, the first electrode 110 may be exposed to the outside through the portion indicated by A of the second electrode 120 in FIG. 2, the portion indicated by D1 of the second electrode 120 in FIG. 3 and the portion indicated by D2 of the second electrode 120 in FIGS. 4 and 5, and the stripping portion may be formed at a position corresponding to the portion A, D1, D2 of the second electrode 120 on the outer surface of the first electrode 110.

In addition, the second electrode 120 may have the stripping portion formed on the outer surface of the portion exposed to the outside without being covered by the first electrode 110 at the outermost layer. The stripping portion may be formed to have an area of 10% or more of the entire area of the outwardly exposed portion of the first electrode 110 or the second electrode 120. Further, the stripping portion may be formed to have an area of 50% or above of the entire area of the outwardly exposed portion of the first electrode 110 or the second electrode 120. However, the present disclosure is not necessarily limited to the specific exposed areas.

As described above, according to the structure in which the stripping portion is formed in the exposed region of the first electrode 110 or the second electrode 120, it is possible to prevent the electrode or the separator 130 from being degraded. Thus, performance degradation caused by the use of an electrochemical capacitor may be prevented. Moreover, since the stripping portion is formed in the outer portion of the outermost layer which does not contribute significantly to the capacitance of the capacitor, it is possible to prevent or minimize the capacity reduction caused by the formation of the stripping portion.

Hereinafter, examples and comparative examples will be described in detail to explain the present disclosure more specifically. It should be understood, however, that the examples of the present disclosure can be modified in many different ways and should not be construed as being limited to the examples set forth herein. The examples of the present disclosure are provided to more fully describe the present disclosure to those skilled in the art.

### Comparative Example 1

10 parts by weight of carbon black serving as a conductive material was mixed with 80 parts by weight of activated carbon powder, and 10 parts by weight of N-vinyl acetamide polymer and butadiene styrene rubber along with carboxymethyl cellulose serving as a binder was mixed thereto together with distilled water to prepare a slurry. In addition, the slurry was coated on one surface of an aluminum current collector, dried and then hot-rolled to prepare two electrodes of 250 um thickness. In addition, two sheets of separator were interposed between the prepared two electrodes and on an outer side thereof, respectively, and rolled to make an electrode assembly. At this time, the sum of the entire length of the rolled first electrode at an inner side and the entire length of the rolled second electrode at an outer side was 50 cm.

In addition, TEABF₄ (tetraethylammonium tetrafluoroborate) salt was mixed in an acetonitrile organic solvent to prepare a 1M electrolytic solution, and the prepared 1M electrolytic solution was accommodated in a case together with the prepared electrode assembly to make a 50F capacitor of Comparative Example 1.

Here, the entire length of the first electrode and the entire length of the second electrode are as shown in Table 1. Also, Table 1 shows an outermost layer exposure ratio of the first electrode, namely a ratio of an exposed area to an unexposed area in the outermost layer of the first electrode. In Comparative Example 1, the ratio is 10:0, which means that there is no exposed area in the outermost layer of the first electrode. That is, in Comparative Example 1, the outermost layer of the first electrode is entirely covered by the second electrode, and thus the entire portion of the outermost layer of the first electrode is not exposed to the outside.

### Example 1

An electrode assembly was prepared in the same manner as in Comparative Example 1. In Example 1, however, the entire length of the first electrode, the entire length of the second electrode, and the outermost layer exposure ratio of the first electrode were different from those of Comparative Example 1. The changed numerical values are shown in Table 1. In particular, in Example 1, the outermost layer exposure ratio of the first electrode (the ratio of an exposed area to an unexposed area in the outermost layer of the first electrode) is 8:2. In addition, in Example 1, the entire length of the first electrode is shorter than the second electrode by 1 cm.

### Example 2

A capacitor was prepared in the same manner as in Example 1, except that the entire length of the first electrode, the entire length of the second electrode, and the outermost layer exposure ratio of the first electrode were different from those of Example 1 as shown in Table 1. Namely, in Example 2, the outermost layer exposure ratio of the first electrode is 7:3, and the entire length of the first electrode is equal to the second electrode.

### Example 3

A capacitor was prepared in the same manner as in Example 1, except that the entire length of the first electrode, the entire length of the second electrode, and the outermost layer exposure ratio of the first electrode were different from those of Example 1 as shown in Table 1. Namely, in Example 3, the outermost layer exposure ratio of the first electrode is 5:5, and the entire length of the first electrode is longer than the second electrode by 0.5 cm.

### Example 4

A capacitor was prepared in the same manner as in Example 1, except that the entire length of the first electrode, the entire length of the second electrode, and the outermost layer exposure ratio of the first electrode were different from those of Example 1 as shown in Table 1. Namely, in Example 4, the outermost layer exposure ratio of the first electrode is 3:7, and the entire length of the first electrode is longer than the second electrode by 1 cm.

### Example 5

A capacitor was prepared in the same manner as in Example 1, except that the entire length of the first electrode, the entire length of the second electrode, and the outermost layer exposure ratio of the first electrode were different from those of Example 1 as shown in Table 1. Namely, in Example 5, the outermost layer exposure ratio of the first electrode is 2:8, and the entire length of the first electrode is longer than the second electrode by 2 cm.

### Example 6

A capacitor was prepared in the same manner as in Example 1, except that the entire length of the first electrode, the entire length of the second electrode, and the outermost layer exposure ratio of the first electrode were different from those of Example 1 as shown in Table 1. Namely, in Example 6, the outermost layer exposure ratio of the first electrode is 0:10, which means that the outermost layer of the first electrode is entirely exposed to the outside. In addition, the entire length of the first electrode is longer than the second electrode by 3 cm.

**[Table 1]**

| Sample | Outermost layer exposure ratio of First electrode | Length of Second electrode | Length of First electrode |
|---|---|---|---|
| Comparative Example 1 | 10:0 | 26 | 24 |
| Example 1 | 8:2 | 25.5 | 24.5 |
| Example 2 | 7:3 | 25 | 25 |
| Example 3 | 5:5 | 24.75 | 25.25 |
| Example 4 | 3:7 | 24.5 | 25.5 |
| Example 5 | 2:8 | 24 | 26 |
| Example 6 | 0:10 | 23.5 | 26.5 |

The capacitors obtained in Comparative Example 1 and Examples 1 to 6 were put into an oven and maintained in the oven under the condition of 75°C, 3.1V for 32 hours, by using the first electrode as a negative electrode and the second electrode as a positive electrode. In addition, at the end of 32 hours, the capacitor was discharged and taken out of the oven. After a stabilization time, DC ESR (Equivalent Serial Resistance) was measured by IR drop at charging/discharging with 3A at room temperature. The measurement results are shown in Table 2.

In addition, for the capacitors of Comparative Example 1 and Examples 1 to 6, the change in height of the case was measured in a DC operation environment. The measurement results are shown in Table 2. That is, each capacitor was charged to 3.1V with 0.5A, then maintained at for 32 hours under the condition of 75°C, 3.1V, discharged to 0.1V with 0.5A, and then placed in a room-temperature stabilization state for 10 hours so that voltage is not applied thereto at room temperature. After the stabilization, the change in height of the case of the capacitor due to the life test in a 32 hour extreme environment was measured. As the capacitor continues to be used, the volume of the capacitor may be increased since gas or the like is generated therein. The change in height of the case may be used as a criterion for determining the amount of internal gas generated.

**[Table 2]**

| Sample | Initial performance | High-temperature acceleration test (3.1 V/75°C/32hr) | |
|---|---|---|---|
| | DC ESR | Δ DC ESR | Δ Height (gas) |
| | mΩ | % | % |
| Comparative Example 1 | 11.9 | 123 | 3.1 |
| Example 1 | 12.2 | 93 | 2.8 |
| Example 2 | 12.7 | 63 | 2.5 |
| Example 3 | 11.7 | 73 | 2.6 |
| Example 4 | 11.8 | 74 | 2.7 |
| Example 5 | 12.2 | 74 | 3.2 |
| Example 6 | 11.7 | 95 | 4.5 |

Seeing the results of Table 2, it may be found that the capacitors of Examples 1 to 6 according to the present disclosure have a significantly lower increase in resistance, compared to the capacitor of Comparative Example 1. In particular, the resistance increase in Examples 2 to 5 is greatly different from that of Comparative Example 1. Further, in Example 2, the resistance change rate is smallest.

Thus, from the above, in the case of a capacitor configured to expose at least a portion of the outermost layer of the first electrode located at an inner side, since the resistance increase rate according to use is lower than that of the conventional capacitor, the performance is not easily deteriorated even though the charge/discharge is repeated, and thus the performance may be maintained stably for a long time.

In addition, seeing the results of Table 2, it may be found that the capacitors of Examples 1 to 4 according to the present disclosure do not have a great height increase rate according to use, compared to the capacitor of Comparative Example 1. Thus, it may be understood that the capacitor according to an embodiment of the present disclosure generates less gas, compared to the capacitor of the comparative example. For this reason, the capacitor according to the present disclosure, in which at least a portion of the outermost layer of the first electrode located at an inner side is exposed to the outside, is not easily deformed due to the swelling phenomenon, and the risk of breakage or explosion is greatly lowered thereby remarkably improving the safety.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. An electrochemical capacitor, comprising:
a first electrode provided in a rolled sheet form and having active material layers coated on both surfaces thereof;
a second electrode provided in a rolled sheet form at an outer side of the first electrode to face the first electrode and having active material layers coated on both surfaces thereof; and
a separator interposed and rolled between the first electrode and the second electrode,
wherein at least a portion of an outermost layer of the first electrode is exposed to the outside.

2. The electrochemical capacitor according to claim 1,
wherein a terminal portion of the first electrode is extended longer than a terminal portion of the second electrode so that at least a portion of the outermost layer of the first electrode is exposed to the outside.

3. The electrochemical capacitor according to claim 1,
wherein a terminal portion of the second electrode is partially cut to be concave inwards in a length direction.

4. The electrochemical capacitor according to claim 1,
wherein the second electrode has a hole formed through a portion of an outermost layer thereof in a thickness direction.

5. The electrochemical capacitor according to claim 1,
wherein 20% to 80% of the entire area of the outermost layer of the first electrode is exposed to the outside.

6. The electrochemical capacitor according to claim 1,
wherein 30% to 70% of the entire area of the outermost layer of the first electrode is exposed to the outside.

7. The electrochemical capacitor according to claim 1,
wherein the first electrode has a length equal to or greater than a length of the second electrode.

8. The electrochemical capacitor according to claim 1,
wherein at least one of the first electrode and the second electrode has a stripping portion on an outer surface of the outermost layer thereof, at which the active material layer is at least partially removed or is not formed.

## Amended claims

### Amended claims under Art. 19.1 PCT

**1.** An electrochemical capacitor, comprising:
a first electrode provided in a rolled sheet form and having active material layers coated on both surfaces thereof;
a second electrode provided in a rolled sheet form at an outer side of the first electrode to face the first electrode and having active material layers coated on both surfaces thereof; and
a separator interposed and rolled between the first electrode and the second electrode,
wherein at least a portion of an outermost layer of the first electrode is exposed to the outside.

**2.** The electrochemical capacitor according to claim 1,
wherein a terminal portion of the first electrode is extended longer than a terminal portion of the second electrode so that at least a portion of the outermost layer of the first electrode is exposed to the outside.

**3.** The electrochemical capacitor according to claim 1,
wherein a terminal portion of the second electrode is partially cut to be concave inwards in a length direction.

**4.** The electrochemical capacitor according to claim 1,
wherein the second electrode has a hole formed through a portion of an outermost layer thereof in a thickness direction.

**5.** The electrochemical capacitor according to claim 1,
wherein 20% to 80% of the entire area of the outermost layer of the first electrode is exposed to the outside.

**6.** The electrochemical capacitor according to claim 1,
wherein 30% to 70% of the entire area of the outermost layer of the first electrode is exposed to the outside.

**7.** The electrochemical capacitor according to claim 1,
wherein the first electrode has a length equal to or greater than a length of the second electrode.

**8.** The electrochemical capacitor according to claim 1,
wherein at least one of the first electrode and the second electrode has a stripping portion on an outer surface of the outermost layer thereof, at which the active material layer is at least partially removed or is not formed.

**9.** New) The electrochemical capacitor according to claim 1,
wherein 10% to 90% of the entire area of the outermost layer of the first electrode is exposed to the outside.

**10.** New) An electrochemical capacitor, comprising:
an electrode assembly having a first electrode, a second electrode, and a separator interposed and rolled between the first electrode and the second electrode,
wherein the second electrode is located at an outer side of the first electrode,
wherein the first electrode and the second electrode are coated with an active material layer, and
wherein at least a portion of an outermost layer of the first electrode is exposed to the outside.

**11.** New) The electrochemical capacitor according to claim 10,
wherein an outer surface of the outermost layer of the first electrode is at least partially not coated with the active material layer.

**12.** New) The electrochemical capacitor according to claim 10,
wherein at least a portion of the outermost layer of the first electrode is coated with the active material layer in a smaller thickness, compared to the other portion thereof.

**13.** New) The electrochemical capacitor according to claim 10,
wherein 10% to 90% of the entire area of the outermost layer of the first electrode is exposed to the outside.
